# EUROPEAN PATENT SPECIFICATION

(11) **EP 2 175 157 B1**
(45) Date of publication and mention of the grant of the patent: **12.12.2012**
(21) Application number: 09171474.1
(22) Date of filing: 28.09.2009
(51) Int. Cl.: F16D 65/14

(54) **Brake fur use in a work machine**
Bremsbelagverwendung in einer Arbeitsmaschine
Frein à utiliser dans une machine de travail

(30) Priority: 08.10.2008 US 247341
(43) Date of publication of application: 14.04.2010
(73) Proprietor: DEERE & COMPANY, Moline, Illinois 61265-8098 (US)
(72) Inventor: Ore, Thomas G, Cedar Falls, IA 50613 (US); Knowles, Richard N, Waterloo, IA 50710 (US)
(74) Representative: Dehnhardt, Florian Christopher

(56) References cited:
- EP-A- 0 416 412
- US-A- 2 938 607
- US-A- 5 368 137
- US-B1- 6 571 928

## Description

The present invention relates to a brake for use in a work machine.

Such a brake is known from prior art document US 5 368 137 A showing the features of the preamble of claim 1.

A work machine such as an agricultural tractor may include an internal combustion (IC) engine which provides input power to a transmission, which in turn is coupled with and drives the rear axles through a rear end differential. The transmission, rear end differential and rear axles are sometimes referred to as the "rear end" of the work machine. The transmission typically is attached to the front of and provides input power to the rear end differential. The rear end differential provides ground power to the two rear axles, and also usually includes at least one power take-off (PTO) shaft extending rearwardly within the three point hitch arrangement at the rear of the tractor.

A work machine typically includes a pair of service brakes respectively associated with the two rear axles. Typically a pair of brake pedals is located in the operator's station. The left brake pedal operates the left rear brake and the right brake pedal operates the right rear brake. Depressing both brake pedals simultaneously operates both rear brakes. Each brake usually includes a hydraulically operated piston which is actuated upon depressing a corresponding brake pedal. The piston applies a biasing force against a friction disc, which in turn is backed by a reaction plate.

In the North American market, service brakes as described above are all that is typically provided within a work machine. However, in other markets such as the European market, secondary brakes are also required in addition to the primary service brakes. Such secondary brakes typically apply a strictly mechanical biasing force, in the event of failure of the hydraulically actuated primary service brakes.

One type of secondary brake used with work machines includes a friction disc which is separate from the friction discs associated with the primary service brakes. The secondary brakes are not frequently used, and therefore the dedicated friction discs associated with the secondary brakes do not experience considerable wear.

What is needed in the art is a secondary brake for a work machine which is less complicated than other existing secondary brakes, while still being reliable and easy to use.

The invention is defined by claim 1.

Preferred embodiments are described by the subclaims 2-12.

The invention in yet another form is directed to a work machine according to claim 13.

For a complete understanding of the objects, techniques, and structure of the invention reference should be made to the following detailed description and accompanying drawings, wherein corresponding technical features are provided with identical reference numerals:
- Fig. 1: is a perspective view of an embodiment of a rear end of the present invention used in an agricultural tractor,
- Fig. 2: is a perspective view of a rear end differential housing of the rear end shown in Fig. 1, with a secondary brake in place within the rear end differential housing,
- Fig. 3: is another perspective view of the rear end differential housing shown in Fig. 2, with a cover for an adjustment mechanism removed,
- Fig. 4: is another perspective view of the rear end differential housing shown in Figs. 2 and 3,
- Fig. 5: is an interior perspective view of the rear end differential housing shown in Figs. 2, 3 and 4, showing an actuator and adjustment mechanism from within the housing,
- Fig. 6: is a sectional view taken along line 6-6 in Fig. 2, illustrating parts of a primary service brake and secondary brake,
- Fig. 7: is a sectional view of the secondary brake taken along line 7-7 in Fig. 2,
- Fig. 8: is a sectional view of the adjustment mechanism taken along line 8-8 in Fig. 2,
- Fig. 9: is a perspective view of the actuator and adjustment mechanism engaged with a center plate and inner plate, respectively, and the rear end differential housing removed,
- Fig. 10: is an illustration of a first step of a sequential method of assembly of the secondary brake,
- Fig. 11: is an illustration of a second step of a sequential method of assembly of the secondary brake,
- Fig. 12: is an illustration of a third step of a sequential method of assembly of the secondary brake,
- Fig. 13: is an illustration of a fourth step of a sequential method of assembly of the secondary brake,
- Fig. 14: is an illustration of a fifth step of a sequential method of assembly of the secondary brake, and
- Fig. 15: is an illustration of a sixth step of a sequential method of assembly of the secondary brake.

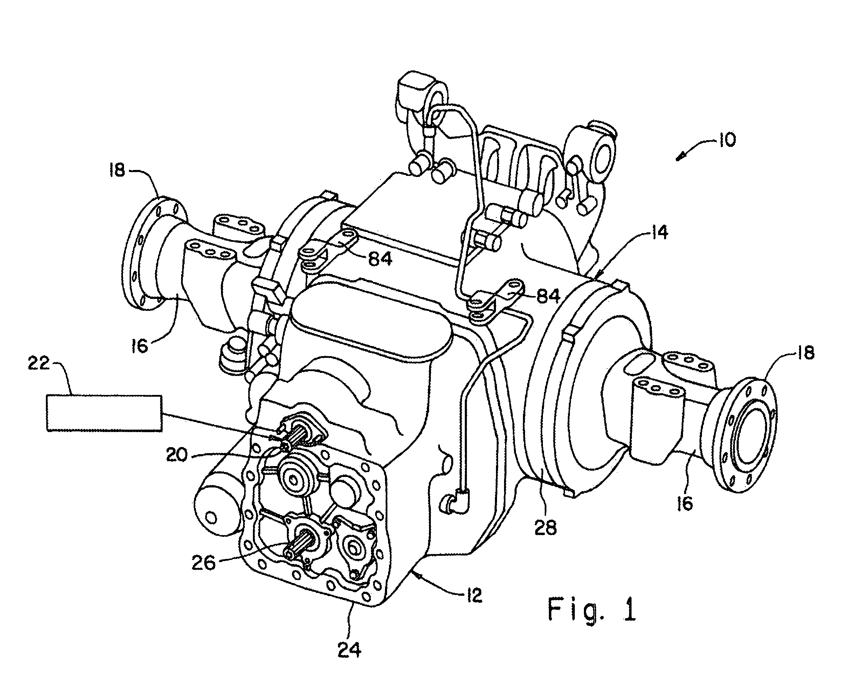

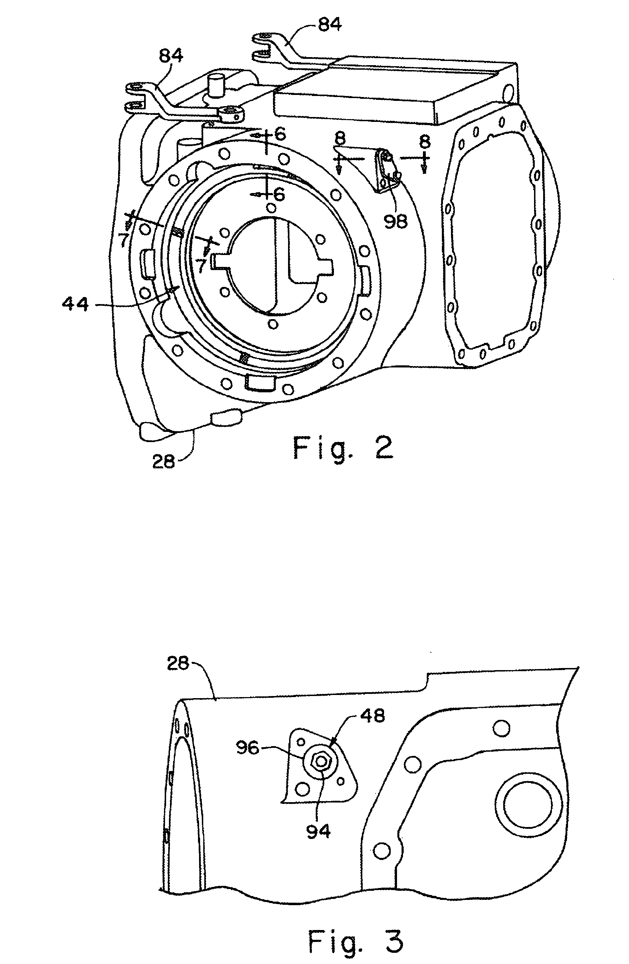

Referring now to the drawings, and more particularly to Figs. 1 and 2, there is shown a portion 10 of a work machine in the form of an agricultural tractor, particularly a rear end drive train of the tractor. Although shown as an agricultural tractor, it is possible that the work machine could be in the form of a different type of work machine, such as a construction tractor or forestry machine.

Portion 10 of the agricultural tractor includes a rear end with a transmission 12 which is coupled with a rear end differential 14, which in turn drives a pair of rear axles 16. Each rear axle 16 includes an outboard hub 18 to which a respective rear drive wheel (not shown) is mounted. Although rear axles 16 are shown configured for carrying respective drive wheels, it is also possible that rear end differential 14 can be configured for driving a pair of ground engaging tracks.

Transmission 12 includes a driven shaft 20 which is mechanically coupled with and receives rotational input power from IC engine 22, shown schematically in Fig. 1. Driven shaft 20 transfers rotational power via appropriate gearing to rear end differential 14 (see Fig. 2).

Driven shaft 20 extends through and is rotatably carried by housing 24, which likewise houses and rotatably carries a number of other components. For example, housing 24 carries a mechanical front wheel drive (MFWD) module (not specifically shown) which selectively transfers output power to an output shaft 26 providing rotational output power to the MFWD at the front axle of the tractor. A clutch arrangement (not shown) selectively interconnects with output shaft 26 so that the MFWD is engaged by actuation of a switch (not shown) in the operator station.

Rear end differential 14 includes a rear end differential housing 28, also shown in Figs. 2 to 5. Differential housing 28 carries a pair of brakes 30 of the present invention at each rear axle 16, including both a primary service brake 32 and a secondary brake 34. Only a single brake 30 is shown in Figs. 2 to 4, the other brake being substantially the same.

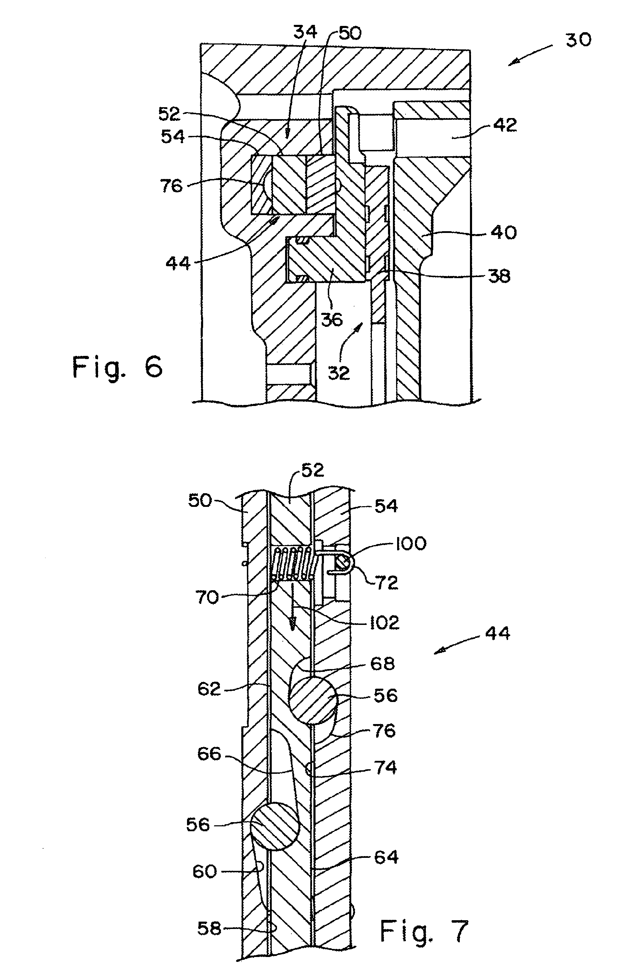

Referring to Fig. 6, primary service brake 32 generally includes a piston 36, friction disc 38 and reaction plate 40. Piston 36 is hydraulically actuated by depressing a corresponding foot pedal within the operator station, which in turn exerts a force against friction disc 38, backed by reaction plate 40. A spring loaded retractor (not shown) positioned within a passage 42 biases piston 36 in a direction away from friction disc 38 when piston 36 is not hydraulically actuated.

Secondary brake 34 likewise uses the same components making up primary service brake 32 so that an additional friction disc, etc. is not needed, thereby reducing the part count and cost. Secondary brake 34 furthermore includes a ball ramp assembly 44, an actuator 46 and an adjustment mechanism 48.

Ball ramp assembly 44 includes an inner plate 50, a center plate 52, an outer plate 54 and a plurality of balls 56 (Figs. 6, 7 and 9). Inner plate 50, center plate 52 and outer plate 54 are configured as generally ring-shaped discs which are generally coaxially arranged relative to each other in an area which is radially outward of piston 36. Inner plate 50 includes an outer axial face 58 with a plurality of ball ramps 60. Ball ramps 60 can generally be thought of as elongated, ramped recesses which are formed in outer axial face 58. Relative motion between inner plate 50, center plate 52 and outer plate 54 in a rotational direction in turn causes the balls carried within ball ramp 60 to vary the overall axial thickness of ball ramp assembly 44.

Center plate 52, positioned adjacent to inner plate 50, includes opposite axial faces 62 and 64 which each have a plurality of ball ramps 66 and 68. Ball ramps 66 associated with inner axial face 62 have a longer ramp than ball ramps 68 associated with outer axial face 64. The longer ball ramps associated with inner axial face 62 provide a finer adjustment of the axial thickness of ball ramp assembly 44, whereas the shorter ball ramp 68 associated with outer axial face 64 define an actuation side of ball ramp assembly 44. Center plate 52 also includes a plurality of holes 70 which receive respective tension springs 72 which sandwich the plates 50, 52 and 54 together.

Outer plate 54 similarly includes an inner axial face 74 with a plurality of ball ramps 76. Ball ramps 76 are shorter ball ramps with a length generally corresponding to ball ramp 68 on outer axial face 64 of center plate 52. Although balls 56 shown between center plate 52 and outer plate 54 are the same size as balls 56 between center plate 52 and inner plate 50, it may also be possible to provide balls between the respective plates which are different in size. That is, the balls between center plate 52 and outer plate 54 could be of a different size than the balls between center plate 52 and inner plate 50.

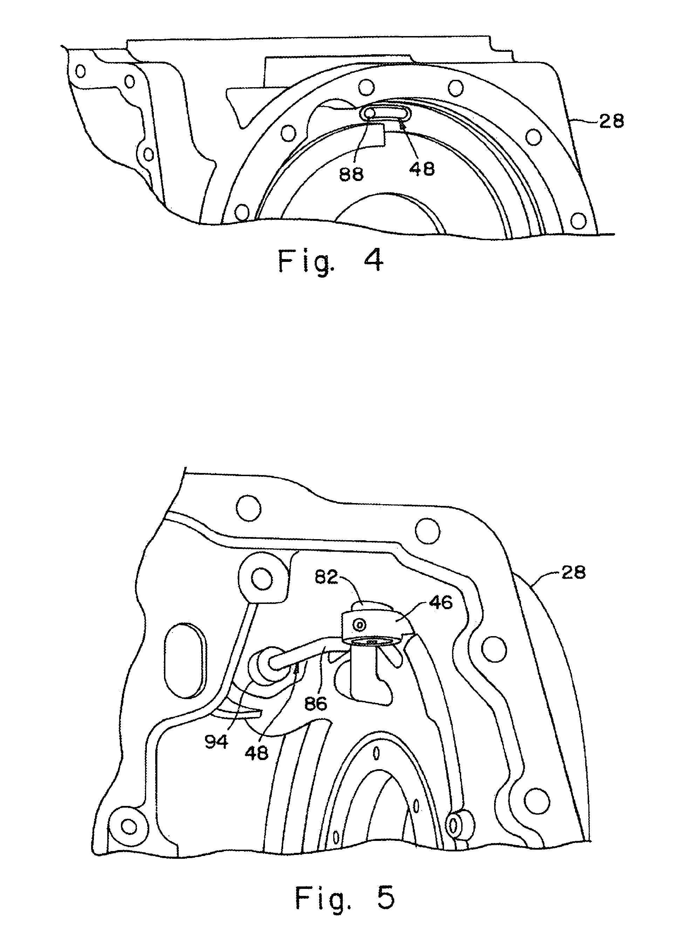

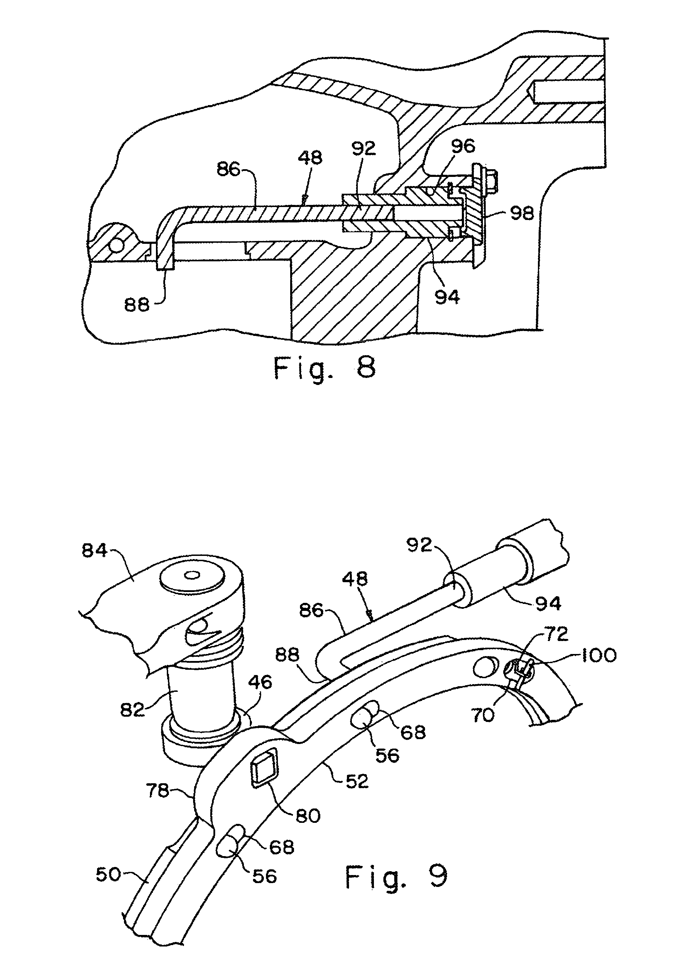

Center plate 52 also includes an ear 78 which extends radially outward from the outer periphery of the remainder of center plate 52. Ear 78 includes an opening 80 which is sized and shaped to receive actuator 46 carried by rear end differential housing 28 (Figs. 5 and 9). Actuator 46 is attached to a rod 82 extending through differential housing 28, which in turn is coupled with an actuation lever 84 at the exterior of differential housing 28. Actuation lever 84 is sortably configured to couple with a manually actuated linkage or the like to engage secondary brake 34 through the use of actuator 46. Adjustment mechanism 48 is used to adjust the axial thickness of ball ramp assembly 44 as friction disc 38 of primary service brake 32 wears over time. In contrast with known secondary brakes which utilize a dedicated friction disc, the present invention utilizes friction disc 38 of primary service brake 32 which experiences more wear, thus requiring the occasional adjustment of the thickness of ball ramp assembly 44.

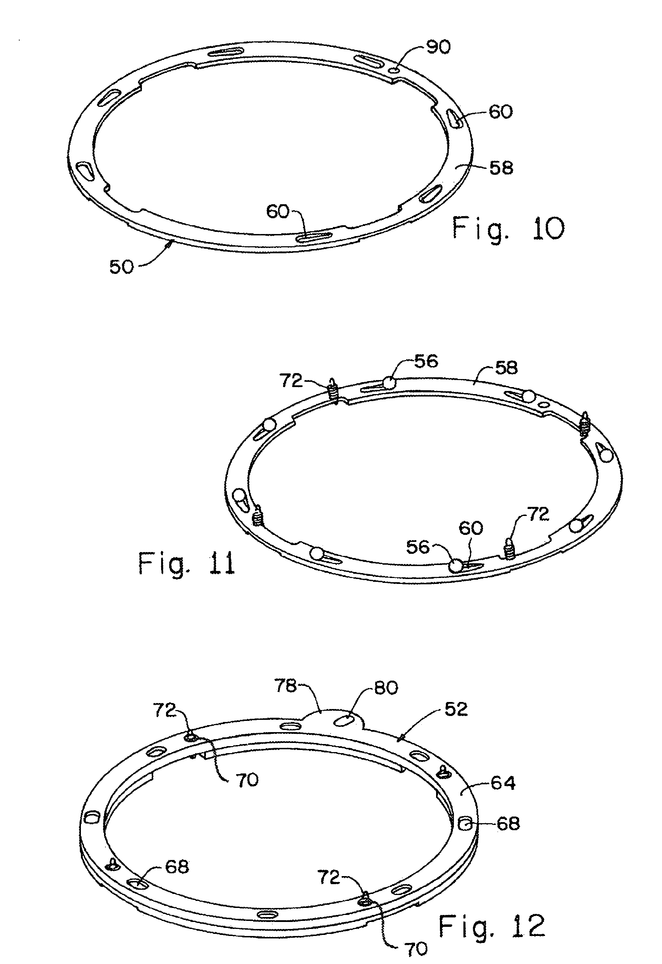

Adjustment mechanism 48 generally includes an adjustable link 86 which is coupled with inner plate 50 and accessible at the exterior of differential housing 28 (Figs. 5, 8 and 9). In the particular embodiment shown, adjustable link 86 is in the form of a generally L-shaped link having an end 88 which is received within a hole 90 (Fig. 10) formed in inner plate 50. The L-shaped link 86 has an opposite end 92 with exterior threads which are threaded with an adjustment nut 94. Adjustment nut 94 is received within an opening 96 which is accessible at the exterior of differential housing 28. Opening 96 is closed by a cover 98 for the majority of the time when it is not necessary to access adjustment nut 94 (Figs. 2, 3 and 8). Cover 98 may include flats which interface with adjustment nut 94 to prevent rotation of adjustment nut 94 when cover 98 is in place.

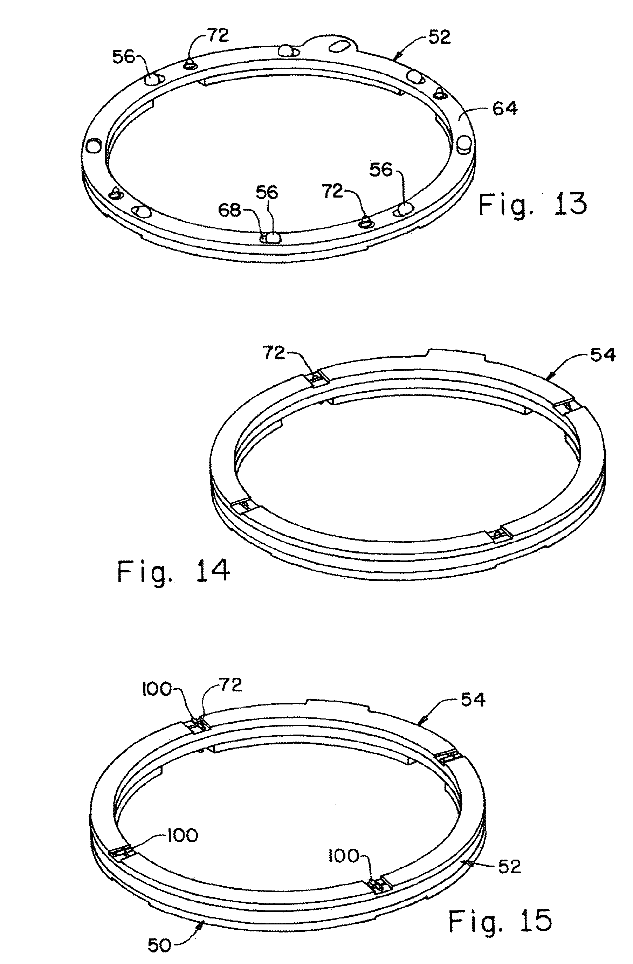

Referring to Figs. 10 to 15, the general assembly of ball ramp assembly 44 will now be described. Inner plate 50 (Fig. 10) makes up an adjuster plate which is positioned with outer axial face 58 facing upward so that balls 56 may be placed within corresponding ball ramps 60. Springs 72 are also attached at one end thereof with inner plate 50 (Fig. 11). Center plate 52 defines an actuation plate which is positioned over inner plate 50 such that springs 72 extend through holes 70 in center plate 52. The location of holes 70 is such that balls 56 at the upper surface of inner plate 50 will align with ball ramps 66 at the inner axial face 62 of center plate 52. A second row of balls 56 is then added to the shorter actuation ball ramp 68 at outer axial face 64 of center plate 52 (Fig. 13). Outer plate 54 defines a reaction plate which is then placed over center plate 52 such that the opposite ends of springs 72 extend through slotted openings formed in outer plate 54 (Fig. 14). Springs 72 are then stretched slightly so that retainer pins 100 may be inserted to hold the entire ball ramp assembly 44 together (Fig. 15).

To adjust the axial thickness of ball ramp assembly 44 upon wear of friction disc 38 over time, cover 98 is removed from differential housing 28 and adjustment nut 94 is rotated. This in turn causes rotational movement of inner plate 50. Balls 56 within corresponding ramps 60 and 66 expand the axial gap between inner plate 50 and center plate 52, thereby increasing the overall thickness of ball ramp assembly 44.

To actuate secondary brake 34, actuation levers 84 are simultaneously actuated to cause the pair of actuators 46 on each side of differential housing 28 to engage a corresponding center plate 52. Center plate 52 moves in a direction as shown by arrow 102 in Fig. 7. This causes balls 56 between adjacent ramps 68 and 76 to increase the gap between center plate 52 and outer plate 54, thereby exerting a force against piston 36 and friction disc 38.

Having described the preferred embodiment, it will become apparent that various modifications can be made without departing from the scope of the invention as defined in the accompanying claims.

## Claims

1. A brake for use in a work machine, said brake comprising a ball ramp assembly (44) including an inner plate (50), said inner plate (50) including an outer axial face (58) with a plurality of ball ramps (60); an outer plate (54), said outer plate (54) including an inner axial face (74) with a plurality of ball ramps (76): and a plurality of balls (56), each of said balls (56) positioned within one of said ball ramps (60, 76) of a corresponding one of said inner plate (50) and said outer plate (54) , the ball ramp assembly (44) further including a center plate (52), which is generally coaxially arranged relative to the inner plate and the outer plate, **characterized in that** said center plate (52) includes opposite axial faces (62, 64) which each have a plurality of ball ramps (66, 68), each of said balls (56) also positioned within one of said plurality of ball ramps (66, 68) of said center plate (52).

2. The brake according to claim 1, **characterized in that** the ball ramp assembly (44) further including an actuator (46) coupled with said center plate (52) for actuating said ball ramps (60, 66, 68, 76); and an adjustment mechanism (48) coupled with one of said inner plate (50) and said outer plate (54) for adjusting said ball ramp assembly (44) relative to a friction disc (38) being part of said brake.

3. The brake according to claim 2, **characterized by** further including a hydraulically actuated piston (36) associated with a primary service brake (32) for applying a force to said friction disc (38), said ball ramp assembly (44) being a secondary brake (34) adapted to apply a mechanical biasing force against said piston (36), which in turn applies a mechanical biasing force against said friction disc (38).

4. The brake according to claim 1, **characterized in that** said brake is a secondary
brake (34), and further including a friction disc (38) associated with a primary service brake (32), said secondary brake (34) adapted to apply a mechanical biasing force against said friction disc (38) of the primary service brake (32).

5. The brake according to claim 4, **characterized by** further including a hydraulically actuated piston (36) associated with the primary service brake (32) for applying a force to said friction disc (38), said secondary brake (34) adapted to apply a mechanical biasing force against said piston (36), which in turn applies a mechanical biasing force against said friction disc (38).

6. The brake according to claim 5, **characterized in that** said inner plate (50), said center plate (52), and said outer plate (54) are each positioned radially outward of said piston (36).

7. The brake according to claim 4, **characterized by** including an adjustment mechanism (48) for adjusting said brake (30) relative to said friction disc (38), said adjustment mechanism (48) including an adjustable link (86) which is coupled with said inner plate (52).

8. The brake according to claim 7, **characterized in that** said adjustable link (86) is a generally L-shaped link with one end (88) coupled with said inner plate, and another end (92) threaded with an adjustment nut (94).

9. The brake according to claim 8, **characterized in that** said inner plate (50) includes a hole (90), and said one end (88) of said L-shaped link (86) is received within said hole (90).

10. The brake according to claim 1, **characterized in that** said center plate (52) includes an ear (78) with an opening (80), and further including an actuator (46) received within said opening (80) for actuating said ball ramps (60, 66, 68, 76).

11. The brake according to claim 10, **characterized by** including an actuation lever (84) attached to said actuator (46).

12. The brake according to claim 1, **characterized in that** each of said inner plate (50), said center plate (52), and said outer plate (54) are generally ring shaped discs.

13. A work machine, comprising an engine (22); and a rear end coupled with said engine (22), said rear end including a pair of rear axles (16) and a pair of rear brakes (30) respectively associated with each rear axle (16), each said rear brake (30) including a friction disc (38); a ball ramp assembly (44), including an inner plate (50), a center plate (52), and an outer plate (54) which are generally coaxially arranged relative to each other, said inner plate (50) including an outer axial face (58) with a plurality of ball ramps (60), said center plate (52) including opposite axial faces (62, 64) which each have a plurality of ball ramps (66, 68), and said outer plate (54) including an inner axial face (74) with a plurality of ball ramps (76); and a plurality of balls (56), each one of said balls (56) positioned within one of said plurality of ball ramps (66, 68) of said center plate (52), and also positioned within one of said ball ramps (60, 76) of a corresponding one of said inner plate (50) and said outer plate (54); an actuator (46) coupled with said center plate (52) for actuating said ball ramps (60, 66, 68, 76); and an adjustment mechanism (48) coupled with one of said inner plate (50) and said outer plate (54) for adjusting said ball ramp assembly (44) relative to said friction disc (38).

14. The work machine according to claim 13, **characterized by** further including a hydraulically actuated piston (36) associated with a primary service brake (32) for applying a force to said friction disc (38), said ball ramp assembly (44) being a secondary brake (34) adapted to apply a mechanical biasing force against said piston (36), which in turn applies a mechanical biasing force against said friction disc (38).

## Patentansprüche

1. Bremse zur Verwendung in einer Arbeitsmaschine, wobei die Bremse eine Kugelrampenanordnung (44) umfasst, die eine innere Platte (50), wobei die innere Platte (50) eine axiale Außenfläche (58) mit mehreren Kugelrampen (60) enthält; eine äußere Platte (54), wobei die äußere Platte (54) eine axiale Innenfläche (74) mit mehreren Kugelrampen (76) enthält; und mehrere Kugeln (56), wobei jede der Kugeln (56) in einer der Kugelrampen (60, 76) einer entsprechenden der inneren Platte (50) und der äußeren Platte (54) positioniert ist, enthält, wobei die Kugelrampenanordnung (44) weiterhin eine mittlere Platte (52) enthält, die bezüglich der inneren Platte und der äußeren Platte allgemein koaxial angeordnet ist, **dadurch gekennzeichnet, dass** die mittlere Platte (52) einander gegenüberliegende axiale Flächen (62, 64) enthält, die jeweils mehrere Kugelrampen (66, 68) aufweisen, wobei jede der Kugeln (56) weiterhin in einer der mehreren Kugelrampen (66, 68) der mittleren Platte (52) positioniert ist.

2. Bremse nach Anspruch 1, **dadurch gekennzeichnet, dass** die Kugelrampenanordnung (44) weiterhin einen Aktuator (46), der mit der mittleren Platte (52) zur Betätigung der Kugelrampen (60, 66, 68, 76) gekoppelt ist, und einen Einstellmechanismus (48), der mit der inneren Platte (50) oder der äußeren Platte (54) zum Einstellen der Kugelrampenanordnung (44) bezüglich einer Reibscheibe (38), die Teil der Bremse ist, gekoppelt ist, enthält.

3. Bremse nach Anspruch 2, **dadurch gekennzeichnet, dass** sie weiterhin einen hydraulisch betätigten Kolben (36) enthält, der einer Primärbetriebsbremse (32) zum Anlegen einer Kraft an die Reibscheibe (38) zugeordnet ist, wobei die Kugelrampenanordnung (44) eine Sekundärbremse (34) ist, die zum Anlegen einer mechanischen Vorspannkraft an den Kolben (36) ausgeführt ist, der wiederum eine mechanische Vorspannkraft an die Reibscheibe (38) anlegt.

4. Bremse nach Anspruch 1, **dadurch gekennzeichnet, dass** die Bremse eine Sekundärbremse (34) ist, und weiterhin mit einer Reibscheibe (38), die einer Primärbetriebsbremse (32) zugeordnet ist, wobei die Sekundärbremse (34) zum Anlegen einer mechanischen Vorspannkraft an die Reibscheibe (38) der Primärbetriebsbremse (32) ausgeführt ist.

5. Bremse nach Anspruch 4, **dadurch gekennzeichnet, dass** sie weiterhin einen hydraulisch betätigten Kolben (36) enthält, der der Primärbetriebsbremse (32) zum Anlegen einer Kraft an die Reibscheibe (38) zugeordnet ist, wobei die Sekundärbremse (34) zum Anlegen einer mechanischen Vorspannkraft an den Kolben (36) ausgeführt ist, der wiederum eine mechanische Vorspannkraft an die Reibscheibe (38) anlegt.

6. Bremse nach Anspruch 5, **dadurch gekennzeichnet, dass** die innere Platte (50), die mittlere Platte (52) und die äußere Platte (54) jeweils radial außerhalb des Kolbens (36) positioniert sind.

7. Bremse nach Anspruch 4, **dadurch gekennzeichnet, dass** sie einen Einstellmechanismus (48) zum Einstellen der Bremse (30) bezüglich der Reibscheibe (38) enthält, wobei der Einstellmechanismus (48) ein verstellbares Verbindungsglied (86) enthält, das mit der inneren Platte (52) gekoppelt ist.

8. Bremse nach Anspruch 7, **dadurch gekennzeichnet, dass** das einstellbare Verbindungsglied (86) ein allgemein L-förmiges Verbindungsglied mit einem mit der inneren Platte gekoppelten Ende (88) und einem mit einer Verstellmutter (94) verschraubten anderen Ende (92) ist.

9. Bremse nach Anspruch 8, **dadurch gekennzeichnet, dass** die innere Platte (50) ein Loch (90) enthält und das Ende (88) des L-förmigen Verbindungsglieds (86) in dem Loch (90) aufgenommen wird.

10. Bremse nach Anspruch 1, **dadurch gekennzeichnet, dass** die mittlere Platte (52) eine Lasche (78) mit einer Öffnung (80) enthält, und weiterhin mit einem Aktuator (46), der in der Öffnung (80) zur Betätigung der Kugelrampen (60, 66, 68, 76) aufgenommen wird.

11. Bremse nach Anspruch 10, **dadurch gekennzeichnet, dass** sie einen Betätigungshebel (84) enthält, der an dem Aktuator (46) befestigt ist.

12. Bremse nach Anspruch 1, **dadurch gekennzeichnet, dass** die innere Platte (50), die mittlere Platte (52) und die äußere Platte (54) jeweils allgemein ringförmige Scheiben sind.

13. Arbeitsmaschine, umfassend einen Motor (22) und ein mit dem Motor (22) gekoppeltes hinteres Ende, wobei das hintere Ende ein Paar Hinterachsen (16) und ein Paar hinterer Bremsen (30) enthält, die jeweils jeder Hinterachse (16) zugeordnet sind, wobei jede solche hintere Bremse (30) eine Reibscheibe (38); eine Kugelrampenanordnung (44), die eine innere Platte (50), eine mittlere Platte (52) und eine äußere Platte (54) enthält, die allgemein koaxial bezüglich einander angeordnet sind, wobei die innere Platte (50) eine axiale Außenfläche (58) mit mehreren Kugelrampen (60) enthält, wobei die mittlere Platte (52) einander gegenüberliegende axiale Flächen (62, 64) enthält, die jeweils mehrere Kugelrampen (66, 68) aufweisen, und die äußere Platte (54) eine axiale Innenfläche (74) mit mehreren Kugelrampen (76) enthält; und mehrere Kugeln (56), wobei eine der Kugeln (56) in einer der mehreren Kugelrampen (66, 68) der mittleren Platte (52) positioniert ist und weiterhin in einer der Kugelrampen (60, 76) einer entsprechenden der inneren Platte (50) und der äußeren Platte (54) positioniert ist; einen Aktuator (46), der mit der mittleren Platte (50) zur Betätigung der Kugelrampen (60, 66, 68, 76) gekoppelt ist; und einen Einstellmechanismus (48), der mit der inneren Platte (50) oder der äußeren Platte (54) zur Einstellung der Kugelrampenanordnung (44) bezüglich der Reibscheibe (38) gekoppelt ist, enthält.

14. Arbeitsmaschine nach Anspruch 13, **dadurch gekennzeichnet, dass** sie weiterhin einen hydraulisch betätigten Kolben (36) enthält, der einer Primärbetriebsbremse (32) zum Anlegen einer Kraft an die Reibscheibe (38) zugeordnet ist, wobei die Kugelrampenanordnung (44) eine Sekundärbremse (34) ist, die zum Anlegen einer mechanischen Vorspannkraft an den Kolben (36) ausgeführt ist, der wiederum eine mechanische Vorspannkraft an die Reibscheibe (38) anlegt.

## Revendications

1. Frein destiné à être utilisé dans un engin de travail, ledit frein comprenant un ensemble de rampes à billes (44) comportant une plaque interne (50), ladite plaque interne (50) comportant une face axiale externe (58) avec une pluralité de rampes à billes (60) ; une plaque externe (54), ladite plaque externe (54) comportant une face axiale interne (74) avec une pluralité de rampes à billes (76) ; et une pluralité de billes (56), chacune desdites billes (56) étant positionnée à l'intérieur d'une desdites rampes à billes (60, 76) d'une plaque correspondante, soit ladite plaque interne (50), soit ladite plaque externe (54), l'ensemble de rampes à billes (44) comportant en outre une plaque centrale (52) qui est disposée généralement coaxialement par rapport à la plaque interne et à la plaque externe, **caractérisé en ce que** ladite plaque centrale (52) comporte des faces axiales opposées (62, 64) qui ont chacune une pluralité de rampes à billes (66, 68), chacune desdites billes (56) étant aussi positionnée à l'intérieur d'une de ladite pluralité de rampes à billes (66, 68) de ladite plaque centrale (52).

2. Frein selon la revendication 1, **caractérisé en ce que** l'ensemble de rampes à billes (44) comprend en outre un actionneur (46) relié à ladite plaque centrale (52) pour actionner lesdites rampes à billes (60, 66, 68, 76) ; et un mécanisme de réglage (48) relié à soit ladite plaque interne (50), soit ladite plaque externe (54) pour régler ledit ensemble de rampes à billes (44) par rapport à un disque de friction (38) faisant partie dudit frein.

3. Frein selon la revendication 2, **caractérisé en ce qu'**il comprend en outre un piston actionné hydrauliquement (36) associé à un frein de service primaire (32) pour appliquer une force sur ledit disque de friction (38), ledit ensemble de rampes à billes (44) étant un frein secondaire (34) adapté de façon à appliquer une force de sollicitation mécanique contre ledit piston (36), qui applique à son tour une force de sollicitation mécanique contre ledit disque de friction (38).

4. Frein selon la revendication 1, **caractérisé en ce que** ledit frein est un frein secondaire (34), et comprenant en outre un disque de friction (38) associé à un frein de service primaire (32), ledit frein secondaire (34) étant adapté de façon à appliquer une force de sollicitation mécanique contre ledit disque de friction (38) du frein de service primaire (32).

5. Frein selon la revendication 4, **caractérisé en ce qu'**il comprend en outre un piston actionné hydrauliquement (36) associé au frein de service primaire (32) pour appliquer une force sur ledit disque de friction (38), ledit frein secondaire (34) étant adapté de façon à appliquer une force de sollicitation mécanique contre ledit piston (36), qui applique à son tour une force de sollicitation mécanique contre ledit disque de friction (38).

6. Frein selon la revendication 5, **caractérisé en ce que** ladite plaque interne (50), ladite plaque centrale (52), et ladite plaque externe (54) sont chacune positionnées radialement vers l'extérieur dudit piston (36).

7. Frein selon la revendication 4, **caractérisé en ce qu'**il comprend un mécanisme de réglage (48) pour régler ledit frein (30) par rapport audit disque de friction (38), ledit mécanisme de réglage (48) comprenant une bielle réglable (86) qui est reliée à ladite plaque interne (52).

8. Frein selon la revendication 7, **caractérisé en ce que** ladite bielle réglable (86) est une bielle généralement en forme de L avec une extrémité (88) reliée à ladite plaque interne, et une autre extrémité (92) filetée avec un écrou de réglage (94).

9. Frein selon la revendication 8, **caractérisé en ce que** ladite plaque interne (50) comporte un trou (90), et ladite une extrémité (88) de ladite bielle en forme de L (86) est reçue à l'intérieur dudit trou (90).

10. Frein selon la revendication 1, **caractérisé en ce que** ladite plaque centrale (52) comporte une oreille (78) avec une ouverture (80), et comprenant en outre un actionneur (46) reçu à l'intérieur de ladite ouverture (80) pour actionner lesdites rampes à billes (60, 66, 68, 76).

11. Frein selon la revendication 10, **caractérisé en ce qu'**il comprend un levier d'actionnement (84) attaché audit actionneur (46).

12. Frein selon la revendication 1, **caractérisé en ce que** ladite plaque interne (50), ladite plaque centrale (52), et ladite plaque externe (54) sont des disques ayant généralement la forme de bagues.

13. Engin de travail, comprenant un moteur (22) ; et une extrémité arrière accouplée audit moteur (22), ladite extrémité arrière comprenant une paire d'essieux arrière (16) et une paire de freins arrière (30) associés respectivement à chaque essieu arrière (16), chaque dit frein arrière (30) comprenant un disque de friction (38) ; un ensemble de rampes à billes (44) comportant une plaque interne (50), une plaque centrale (52) et une plaque externe (54) qui sont disposées généralement coaxialement l'une par rapport à l'autre, ladite plaque interne (50) comportant une face axiale externe (58) avec une pluralité de rampes à billes (60), ladite plaque centrale (52) comportant des faces axiales opposées (62, 64) qui ont chacune une pluralité de rampes à billes (66, 68), et ladite plaque externe (54) comportant une face axiale interne (74) avec une pluralité de rampes à billes (76) ; et une pluralité de billes (56), chacune desdites billes (56) étant positionnée à l'intérieur d'une de ladite pluralité de rampes à billes (66, 68) de ladite plaque centrale (52), et étant positionnée aussi à l'intérieur d'une desdites rampes à billes (60, 76) d'une plaque correspondante, soit ladite plaque interne (50), soit ladite plaque externe (54) ; un actionneur (46) relié à ladite plaque centrale (52) pour actionner lesdites rampes à billes (60, 66, 68, 76) ; et un mécanisme de réglage (48) relié à soit ladite plaque interne (50), soit ladite plaque externe (54) pour régler ledit ensemble de rampes à billes (44) par rapport audit disque de friction (38).

14. Engin de travail selon la revendication 13, **caractérisé en ce qu'**il comprend en outre un piston actionné hydrauliquement (36) associé à un frein de service primaire (32) pour appliquer une force sur ledit disque de friction (38), ledit ensemble de rampes à billes (44) étant un frein secondaire (34) adapté de façon à appliquer une force de sollicitation mécanique contre ledit piston (36), qui applique à son tour une force de sollicitation mécanique contre ledit disque de friction (38).
